# EUROPÄISCHE PATENTSCHRIFT

(11) **EP 2 678 154 B1**
(45) Veröffentlichungstag und Bekanntmachung des Hinweises auf die Patenterteilung: **17.12.2014**
(21) Anmeldenummer: 12706461.6
(22) Anmeldetag: 20.02.2012
(51) Int. Cl.: B32B 7/06, B65D 65/40, B65D 77/20

(54) **VERBUNDFOLIE**
COMPOSITE FILM
FILM COMPOSITE

(30) Priorität: 25.02.2011 EP 11001574
(43) Veröffentlichungstag der Anmeldung: 01.01.2014
(73) Patentinhaber: Amcor Flexibles Singen GmbH, 78224 Singen (Hohentwiel) (DE)
(72) Erfinder: DIETRICH, Christoph, 78224 Singen (DE); HAFNER, Klaus, 78567 Fridingen (DE); BAUER, Sven, 78256 Steisslingen (DE)
(74) Vertreter: Gernet, Samuel Andreas
(86) Internationale Anmeldenummer: PCT/EP2012/000732
(87) Internationale Veröffentlichungsnummer: WO 2012/113530

(56) Entgegenhaltungen:
- EP-A1- 1 484 259
- EP-A1- 1 762 378
- DE-A1- 19 859 334
- US-A- 5 965 254

## Beschreibung

Die Erfindung betrifft eine Verbundfolie mit einer Trägerschicht aus einer Metallfolie und einer mit der Metallfolie verbundenen Siegelschicht zum Verschliessen eines Behälters durch Siegelung der Verbundfolie gegen eine umlaufenden Siegelfläche des Behälters oder eines mit dem Behälter zu verbindenden Deckelrings. Im Rahmen der Erfindung liegt auch ein Behälter oder ein Deckelring zum Verbinden mit einem Behälter, mit einer umlaufenden Siegelfläche aus blankem Weissblech, mit einer auf die Siegelfläche gesiegelten, von der Siegelfläche peelbaren Verschlussmembran aus der Verbundfolie.

Verschlussmembranen aus einer Verbundfolie mit einer Trägerschicht aus einer Aluminiumfolie und einer mit der Aluminiumfolie verbundenen Siegelschicht zum Verschliessen eines Behälters durch Siegelung der Verbundfolie gegen eine umlaufende Siegelfläche des Behälters oder eines mit dem Behälter zu verbindenden Deckelrings sind bekannt.

Zum dichten Verschliessen von Behältern aus Weissblech oder von Behältern mit einem Deckelring aus Weissblech durch Aufsiegeln einer Verschlussmembran auf eine umlaufende Siegelfläche musste die Siegelfläche, bis anhin mit einer heisssiegelfähigen Beschichtung versehen sein, um die Siegelung der Verschlussmembran widerstandsfähig gegen Temperaturschwankungen und Druckschwankungen im Doseninneren zu machen.

Der Erfindung liegt die Aufgabe zugrunde, eine als Verschlussmembran für einen Behälter oder einen mit einem Behälter zu verbindenden Deckelring geeignete Verbundfolie zu schaffen, welche eine robuste Dichtsiegelung sowohl gegen unbeschichtete metallische Siegelflächen, insbesondere Siegelflächen aus blankem Weissblech oder blankem Aluminium, als auch gegen heisssiegelbar modifizierte Siegelflächen ermöglicht. Ein weiteres Ziel der Erfindung ist die gleichzeitige Bereitstellung einer leicht erkennbaren Erstöffnungsgarantie in der Form eines "Footprint". Als Footprint wird ein vom Siegelmedium der Verschlussmembran auf dem Siegelpartner zurück bleibender, visuell erkennbarer Anteil bezeichnet.

Zur erfindungsgemässen Lösung der Aufgabe führt eine Verbundfolie mit den Merkmalen von Anspruch 1.

Die Mittelschicht kann eine oder mehrere Schichten umfassen.

Als Haftvermittler wird ein mit Maleinsäureanhydrid modifiziertes Polypropylen (MAH-PP) und als Mittelschicht ein thermoplastischer Kunststoff mit Polypropylen (PP) als wesentlichem Bestandteil, d.h. mit mehr als 50 Gew.-% PP, eingesetzt.

Beim Lösen einer aus der erfindungsgemässen Verbundfolie hergestellten und gegen eine umlaufenden Siegelfläche eines Behälters oder eines mit dem Behälter verbundenen Deckelrings gesiegelten Verschlussmembran erfolgt die Materialtrennung innerhalb der kohäsiv brechenden Mittelschicht, die zu einem Teil auf der Siegelfläche des Behälters oder des Deckelrings in der Form eines gleichmässigen, sichtbaren Footprints zurückbleibt. Dieser charakteristische Footprint dient zur sofortigen Erkennung gefälschter oder manipulierter Verpackungen und kann somit als Erstöffnungsgarantie eingesetzt werden. Des weiteren zeigt er dem Endkunden, dass die Verpackung sicher und hermetisch versiegelt war.

Die Metallfolie, insbesondere eine Aluminiumfolie, weist bevorzugt eine Dicke von 20 bis 160 µm, insbesondere 50 bis 100 µm, die Haftvermittlerschicht eine Dicke von 1 bis 10 µm, und die kohäsiv brechende Mittelschicht eine Dicke von 5 bis 60 µm auf.

Die Aluminiumfolie kann aus den für Verschlussmembranen üblichen Aluminiumlegierungen, wie z. B. EN AW 8011 und EN AW 8021, oder aus Aluminium mit üblichem Reinheitsgrad, z. B. Al 98,6 bestehen. Bevorzugt wird eine weichgeglühte Aluminiumfolie eingesetzt.

Die der Siegelschicht abgewandte, die Aussenseite bildende Seite der Aluminiumfolie kann beispielsweise mit einem Schutzlack, einer kaschierten Kunststofffolie oder Papier, oder mit einem Aufdruck versehen sein.

Eine besonders bevorzugte, kohäsiv brechende Mittelschicht enthält einen Zusatz von Talk, wobei der Talkanteil bevorzugt 5 bis 49 Gew.-%, insbesondere 10 bis 30 Gew.-%, der kohäsiv brechenden Mittelschicht beträgt.

Die kohäsiv brechende Mittelschicht kann neben dem Polypropylen (PP) als Hauptbestandteil zusätzlich noch 5 bis 35 Gew.-% Polyethylen (PE) enthalten.

Die Verbundfolie eignet sich insbesondere zum Verschliessen eines Behälters durch Siegelung der Verbundfolie gegen eine umlaufenden Siegelfläche des Behälters oder eines mit dem Behälter zu verbindenden Deckelrings, wobei die Siegelfläche aus blankem Weissblech besteht.

Weissblech bezeichnet ein dünnes, kaltgewalztes Stahlblech, dessen Oberfläche mit Zinn beschichtet ist. Die Zinnbeschichtung dient vor allem dem Korrosionsschutz. Die Zinnschicht von Weissblech würde - bliebe sie ungeschützt - durch den Sauerstoffgehalt der Luft weiter oxidieren. Damit wird jedoch eine gute Lackhaftung nicht mehr gewährleistet. Deshalb wird Weissblech nach dem Verzinnen üblicherweise einer Passivierungsbehandlung unterzogen, indem auf jede Seite Chrom und Chromoxid zur Verbesserung der Korrosionsbeständigkeit aufgebracht wird. Ausserdem werden dadurch die Lackier- und Bedruckeigenschaften verbessert. Als Weissblech-Passivierungen werden typischerweise folgende Verfahren angewendet (siehe auch DIN-Norm EN 10202):
1. Code 300: Eintauch-Behandlung in eine chemische Lösung eines Dichromatsalzes, wobei der Chromauftrag pro Oberflächeneinheit 1.0 mg/m² bis 3.0 mg/m² beträgt.
2. Code 311: Kathodische Behandlung in einer Dichromatsalz-Lösung eines Alkalimetalls, wobei der Chromauftrag pro Oberflächeneinheit 3.5 mg/m² bis 9.0 mg/m² beträgt.
3. Code 314: Elektrochemische Passivierung, wobei der Chromauftrag pro Oberflächeneinheit 5 mg/m² bis 9.0 mg/m² beträgt.

Ein bevorzugtes blankes Weissblech ist mit einer Tauchpassivierung (Code 300), einer kathodischen Passivierung (Code 311) oder mit einer elektrochemischen Passivierung (Code 314) versehen.

Ein wesentliches Kriterium der erfindungsgemässen Folie ist deren kostengünstige Herstellbarkeit durch eine mehrschichtige Coextrusion der aus einer beidseitig mit je einer Haftvermittlerschicht belegten Mittelschicht bestehenden Siegelschicht, wobei das Coextrudat bevorzugt unmittelbar nach dem Extrusionsvorgang mit der Trägerschicht zur erfindungsgemässen Verbundfolie zusammengeführt wird.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: den Aufbau einer erfindungsgemässe Verbundfolie;
- Fig. 2: einen Schnitt durch einen Deckelring mit Verschlussmembran;
- Fig. 3: einen Schnitt durch den Öffnungsbereich eines Behälters mit einer auf die Aussenseite des Behälters gesiegelten Verschlussmembran;
- Fig. 4: einen Schnitt durch den Öffnungsbereich eines Behälters mit einer auf die Innenseite des Behälters gesiegelten Verschlussmembran.

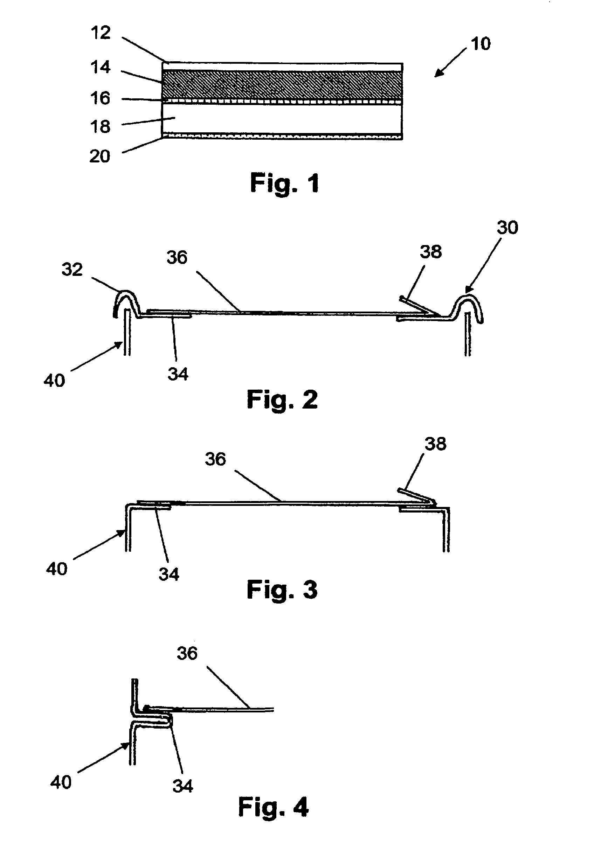

Eine in Fig. 1 gezeigte Verbundfolie 10 weist folgenden Aufbau auf:
- 12: Schutzlack
- 14: Aluminiumfolie
- 16: Haftvermittler aus PP-MAH
- 18: Mittelschicht aus PP / PE mit 5 bis 49 Gew.-% Talk
- 20: Haftvermittler aus PP-MAH

Der Schutzlack 12 ist an einem mit der Verbundfolie 10 verschlossenen Behälter gegen die Behälteraussenseite, die Mittelschicht 18 mit dem Haftvermittler 20 gegen die Behälterinnenseite gerichtet.

Ein in Fig. 2 dargestellter Deckelring 30 aus Weissblech mit einem Bördelrand 32 zum Aufbördeln auf den Öffnungsrand eines Behälters 40 weist eine ringförmig umlaufende, von Bördelrand 32 horizontal nach innen abragende Siegelfläche 34 auf. Die Siegelfläche 34 ist unbeschichtet, d. h., die Siegelfläche 34 weist, wie der übrige Deckelring, eine blanke Oberfläche auf.

Eine aus der Verbundfolie 10 ausgestanzte, mit einer Aufreisslasche 38 ausgestattete Verschlussmembran 36 ist auf die Siegelfläche 34 gesiegelt. Beim Peelen der Verschlussmembran 36 bricht die Mittelschicht 18 kohäsiv und ein Teil der Mittelschicht 18 bleibt als "Footprint" auf der Siegelfläche 34 zurück.

In Fig. 3 ist die Siegelfläche 34 integraler Teil des aus Weissblech gefertigten Behälters 40. Die Siegelfläche 34 ist hier direkt aus dem Behälter 40 geformt und als horizontal einwärts gerichteter Ringflansch ausgebildet, Die Aussenseite des Behälters 40 und damit auch die Siegelfläche 34 ist unbeschichtet, d. h., die Siegelfläche 34 weist eine blanke Weissblechoberfläche auf. Wie vorstehend für den Deckelring 30 beschrieben, bleibt auch hier auf der Siegelfläche 34 beim Öffnen durch Peelen die Mittelschicht 18 infolge des kohäsiven Bruchs als "Footprint" auf der Siegelfläche 34 zurück.

In Fig. 4 ist die Siegelfläche 34 integraler Teil des aus Weissblech gefertigten Behälters 40. Die Siegelfläche 34 ist hier direkt aus dem Behälter 40 geformt und als horizontal einwärts gerichteter Ringflansch ausgebildet, Die Innenseite des Behälters 40 und damit auch die Siegelfläche 34 ist unbeschichtet, d. h., die Siegelfläche 34 weist eine blanke Weissblechoberfläche auf. Wie vorstehend für den Deckelring 30 beschrieben, bleibt auch hier auf der Siegelfläche 34 beim Öffnen durch Peelen die Mittelschicht 18 infolge des kohäsiven Bruchs als "Footprint" auf der Siegelfläche 34 zurück.

Beim Lösen der gegen den die Siegelfläche 34 gesiegelten Verschlussmembran 36 durch Ziehen an der Aufreisslasche 38 erfolgt die Materialtrennung im Innern der Mittelschicht 18. Nach dem vollständigen Entfernen der Verschlussmembran 36 zum erstmaligen Öffnen des Behälters 40 bleibt ein Teil der Mittelschicht 18 als gleichmässiger Belag auf der Siegelfläche 34 zurück. Dieser Belag oder Footprint wird als einfacher und ohne weitere Hilfsmittel erkennbarer Hinweis auf eine Originalpackung mit Erstöffnungsgarantie verwendet.

### Versuchsbeispiele

An Verbundfolien mit den folgenden Schichtaufbauten wurden Versuche zur Haftfestigkeit auf Weissblech mit blanker und lackierter Oberfläche und zum Peelverhalten durchgeführt.

### A. 1,5 µm Schutzlack

60 µm Aluminiumfolie EN AW-8021/AlFe1,5 weichgeglüht
4,5 µm PP-MAH
11 µm PP mit 40 % Talk + LDPE
1,5 µm PP-MAH

### B. 1,5 µm Schutzlack

90 µm Aluminiumfolie EN AW-8011 (A)/AlFeSi (A) weichgeglüht
4,5 µm PP-MAH
11 µm PP mit 40 % Talk + LDPE
1,5 µm PP-MAH

### C. 1,5 µm Schutzlack

60 µm Aluminiumfolie EN AW-8021/AlFe1,5 weichgeglüht
1,5 µm PP-MAH
11 µm PP mit 40 % Talk + LDPE
4,5 µm PP-MAH

### D. 1,5 µm Schutzlack

90 µm Aluminiumfolie EN AW-8011 (A)/AlFeSi (A)
1,5 µm PP-MAH
11 µm PP mit 40% Talk + LDPE
4,5 µm PP-MAH

### E. 1,5 µm Schutzlack

60 µm Aluminiumfolie EN AW-8021/AlFe1,5 weichgeglüht
4,0 µm PP-MAH
11 µm PP mit 40 % Talk + LDPE
2,0 µm PP-MAH

### F. 1,5 µm Schutzlack

60 µm Aluminiumfolie EN AW-8021/AlFe1,5 weichgeglüht
8,0 µm PP-MAH
11 µm PP mit 40 % Talk + LDPE
4,0 µm PP-MAH

Zur Bestimmung der Siegelnahtfestigkeit wurden die Verbundfolien einem Peeltest unterworfen. Die Verbundfolien wurden unter vergleichbaren Siegelbedingungen in der Form 15 mm breiter Streifen gegen eine Weissblechoberfläche gesiegelt.

Als Mass für die Siegelnahtfestigkeit wurde die zum Ablösen der Streifen von der Blechunterlage erforderliche Kraft bestimmt. Der Abzugwinkel der Streifen gegen die auf einem Schlitten verfahrbare Weissblechoberfläche betrug jeweils 90°.

Alle Verbundfolien mit dem erfindungsgemässen Aufbau zeigten bei den Peelversuchen mit blankem Weissblech vergleichbare Peelkräfte bzw. Siegelnahtfestigkeiten. Der als Footprint auf dem Weissblech zurückbleibende Belag war in allen untersuchten Fällen weiss. Vergleichsversuche mit lackiertem Weissblech als Referenz haben gezeigt, dass mit blankem Weissblech vergleichbare Siegelnahtfestigkeiten erzielt werden.

Peelversuche mit Weissblech mit unterschiedlichen Passivierungen haben keine Unterschiede in der Siegelnahtfestigkeit bei den üblichen Passivierungen gemäss den Codes 300, 311 und 314 gezeigt. Auch die bei den Passivierungen eintretende Alterung hatte keinen Einfluss auf die Siegelnahtfestigkeit, d. h., die Verbundfolie verhält sich gegenüber der Alterung des Weissblechs neutral.

## Patentansprüche

1. Verbundfolie mit einer Trägerschicht (14) aus einer Metallfolie und einer mit der Metallfolie verbundenen Siegelschicht zum Verschliessen eines Behälters (40) durch Siegelung der Verbundfolie gegen eine umlaufende Siegelfläche (34) des Behälters (40) oder eines mit dem Behälter (40) zu verbindenden Deckelrings (30), wobei die Siegelschicht eine Coextrusionsschicht mit einer kohäsiv brechenden Mittelschicht (18) und auf beiden Seiten der Mittelschicht (18) angeordneten Haftvermittlerschichten (16, 20) umfasst,
**dadurch gekennzeichnet, dass**
die Haftvermittlerschichten aus einem mit Maleinsäureanhydrid modifizierten Polypropylen (MAH-PP) bestehen und als Mittelschicht ein thermoplastischer Kunststoff enthaltend mehr als 50 Gew-% Polypropylen (PP) eingesetzt wird.

2. Verbundfolie nach Anspruch 1, **dadurch gekennzeichnet, dass** die Metallfolie, insbesondere eine Aluminiumfolie, eine Dicke von 20 bis 160 µm, insbesondere 50 bis 100 µm, die Haftvermittlerschicht (16, 20) eine Dicke von 1 bis 10 µm, und die kohäsiv brechende Mittelschicht (18) eine Dicke von 5 bis 60 µm aufweist.

3. Verbundfolie nach Anspruch 1, **dadurch gekennzeichnet, dass** die kohäsiv brechende Mittelschicht (18) einen Zusatz von Talk enthält.

4. Verbundfolie nach Anspruch 3, **dadurch gekennzeichnet, dass** der Talkanteil 5 bis 49 Gew.-%, vorzugsweise 10 bis 30 Gew.-% der kohäsiv brechenden Mittelschicht (18) beträgt.

5. Verbundfolie nach Anspruch 1, **dadurch gekennzeichnet, dass** die kohäsiv brechende Mittelschicht (18) 5 bis 35 Gew.-% Polyethylen (PE) enthält.

6. Verwendung einer Verbundfolie nach einem der Ansprüche 1 bis 5 zum Verschliessen eines Behälters (40) durch Siegelung der Verbundfolie gegen eine umlaufenden Siegelfläche (34) des Behälters (40) oder eines mit dem Behälter (40) zu verbindenden Deckelrings (30), wobei die Siegelfläche (34) aus blankem Weissblech besteht.

7. Verwendung einer Verbundfolie nach einem der Ansprüche 1 bis 5 zum Verschliessen eines Behälters (40) durch Siegelung der Verbundfolie gegen eine umlaufenden Siegelfläche (34) des Behälters (40) oder eines mit dem Behälter (40) zu verbindenden Deckelrings (30), wobei die Siegelfläche (34) aus blankem Aluminium besteht.

8. Verwendung einer Verbundfolie nach einem der Ansprüche 1 bis 5 zum Verschliessen eines Behälters (40) durch Siegelung der Verbundfolie gegen eine umlaufenden Siegelfläche (34) des Behälters (40) oder eines mit dem Behälter (40) zu verbindenden Deckelrings (30), wobei die Siegelfläche (34) aus einer heisssiegelbar modifizierten, metallischen Oberfläche besteht.

9. Behälter (40) oder Deckelring (30) zum Verbinden mit einem Behälter (40), mit einer umlaufenden Siegelfläche (34) aus blankem Weissblech, wobei eine von der Siegelfläche (34) peelbare Verschlussmembran (36) aus einer Verbundfolie gemäss einem der Ansprüche 1 bis 5 auf die Siegelfläche (34) gesiegelt ist.

10. Behälter nach Anspruch 9, **dadurch gekennzeichnet, dass** das Weissblech mit einer Tauchpassivierung mit einem Chromauftrag von 1 bis 3 mg/m², einer kathodischen Passivierung mit einem Chromauftrag von 3.5 bis 9 mg/m² oder mit einer elektrochemischen Passivierung mit einem Chromauftrag von 5 bis 9 mg/m² versehen ist.

## Claims

1. Composite film comprising a support layer (14) made of a metal film and a sealing layer connected to the metal film for closing a container (40) by sealing the composite film against a circumferential sealing surface (34) of the container (40) or of a cap ring (30) to be connected to the container (40), the sealing layer comprising a coextruded layer having a cohesively breaking intermediate layer (18) and adhesion promoter layers (16, 20) arranged on both sides of the intermediate layer (18), **characterised in that** the adhesion promoter layers are made of a polypropylene modified with maleic anhydride (PP-MA) and a thermoplastic containing more than 50 wt. % polypropylene (PP) is used as the intermediate layer.

2. Composite film according to claim 1, **characterised in that** the metal film, in particular an aluminium film, has a thickness of 20 µm to 160 µm, in particular 50 µm to 100 µm, the adhesion promoter layer (16, 20) has a thickness of 1 µm to 10 µm, and the cohesively breaking intermediate layer (18) has a thickness of 5 µm to 60 µm.

3. Composite film according to claim 1, **characterised in that** the cohesively breaking intermediate layer (18) contains talc as an additive.

4. Composite film according to claim 3, **characterised in that** the talc content is 5 wt. % to 49 wt. %, preferably 10 wt. % to 30 wt. %, of the cohesively breaking intermediate layer (18).

5. Composite film according to claim 1, **characterised in that** the cohesively breaking intermediate layer (18) contains 5 wt. % to 35 wt. % of polyethylene (PE).

6. Use of a composite film according to any of claims 1 to 5 for closing a container (40), by means of sealing the composite film against a circumferential sealing surface (34) of the container (40) or of a cap ring (30) to be connected to the container (40), wherein the sealing surface (34) consists of polished tinplate.

7. Use of a composite film according to any of claims 1 to 5 for closing a container (40) by means of sealing the composite film against a circumferential sealing surface (34) of the container (40) or of a cap ring (30) to be connected to the container (40), wherein the sealing surface (34) consists of polished aluminium.

8. Use of a composite film according to any of claims 1 to 5 for closing a container (40) by means of sealing the composite film against a circumferential sealing surface (34) of the container (40) or of a cap ring (30) to be connected to the container (40), wherein the sealing surface (34) consists of a heat-sealably modified metal surface.

9. Container (40) or cap ring (30) for connecting to a container (40), comprising a circumferential sealing surface (34) made of polished tinplate, wherein a closing membrane (36), made of a composite film according to any of claims 1 to 5 and peelable from the sealing surface (34), is sealed onto the sealing surface (34).

10. Container according to claim 9, **characterised in that** the tinplate is provided with a chromium application of 1 mg/m²to 3 mg/m² by a dip passivation, with a chromium application of 3.5 mg/m² to 9 mg/m² by a cathodic passivation or with a chromium application of 5 mg/m² to 9 mg/m² by an electrochemical passivation.

## Revendications

1. Feuille composite avec une couche de support (14) en une feuille métallique et une couche de scellement reliée à la feuille métallique pour fermer un récipient (40) par scellement de la feuille composite contre une surface de scellement périphérique (34) du récipient (40) ou d'un anneau de couvercle (30) destiné à être relié au récipient (40), où la couche de scellement comprend une couche de coextrusion avec une couche moyenne (18) à fracture cohésive et des couches de promoteur d'adhésion (16, 20) disposées des deux côtés de la couche moyenne (18),
**caractérisée en ce que**
les couches de promoteur d'adhésion consistent en un polypropylène modifié avec l'anhydride maléique (MAH-PP) et une matière synthétique thermoplastique contenant plus de 50 % en poids de polypropylène (PP) est utilisée comme couche moyenne.

2. Feuille composite selon la revendication 1, **caractérisée en ce que** la feuille métallique, en particulier une feuille d'aluminium, présente une épaisseur de 20 à 160 µm, en particulier de 50 à 100 µm, la couche de promoteur d'adhésion (16, 20) présente une épaisseur de 1 à 10 µm et la couche moyenne (18) à fracture cohésive présente une épaisseur de 5 à 60 µm.

3. Feuille composite selon la revendication 1, **caractérisée en ce que** la couche moyenne (18) à fracture cohésive contient une addition de talc.

4. Feuille composite selon la revendication 3, **caractérisée en ce que** la proportion de talc est de 5 à 49 % en poids, de préférence de 10 à 30 % en poids de la couche moyenne (18) à fracture cohésive.

5. Feuille composite selon la revendication 1, **caractérisée en ce que** la couche moyenne (18) à fracture cohésive contient 5 à 35 % en poids de polyéthylène (PE).

6. Utilisation d'une feuille composite selon l'une des revendications 1 à 5 pour la fermeture d'un récipient (40) par scellement de la feuille composite contre une surface de scellement périphérique (34) du récipient (40) ou d'un anneau de couvercle (30) destiné à être relié au récipient (40), où la surface de scellement (34) consiste en fer blanc clair.

7. Utilisation d'une feuille composite selon l'une des revendications 1 à 5 pour la fermeture d'un récipient (40) par scellement de la feuille composite contre une surface de scellement périphérique (34) du récipient (40) ou d'un anneau de couvercle (30) destiné à être relié au récipient (40), où la surface de scellement (34) consiste en aluminium clair.

8. Utilisation d'une feuille composite selon l'une des revendications 1 à 5 pour la fermeture d'un récipient (40) par scellement de la feuille composite contre une surface de scellement périphérique (34) du récipient (40) ou d'un anneau de couvercle (30) destiné à être relié au récipient (40), où la surface de scellement (34) consiste en une surface métallique modifiée pour pouvoir être scellée à chaud.

9. Récipient (40) ou anneau de couvercle (30) destiné à être relié à un récipient (40), avec une surface de scellement périphérique (34) en fer blanc clair, où une membrane de fermeture (36) pouvant être séparée de la surface de scellement (34) en une feuille composite selon l'une des revendications 1 à 5 est scellée sur la surface de scellement (34).

10. Récipient selon la revendication 9, **caractérisé en ce que** le fer blanc est muni d'une passivation par immersion avec une application de chrome de 1 à 3 mg/m², d'une passivation cathodique avec une application de chrome de 3,5 à 9 mg/m² ou d'une passivation électrochimique avec une application de chrome de 5 à 9 mg/m².
